# EUROPÄISCHE PATENTSCHRIFT

(11) **EP 3 835 150 B1**
(45) Veröffentlichungstag und Bekanntmachung des Hinweises auf die Patenterteilung: **01.06.2022**
(21) Anmeldenummer: 20401062.3
(22) Anmeldetag: 03.12.2020
(51) Int. Cl.: B60T 8/18, B60T 7/20, B60T 15/20

(54) **LANDWIRTSCHAFTLICHES ANHÄNGEFAHRZEUG**
AGRICULTURAL TRAILER VEHICLE
VÉHICULE TRACTÉ AGRICOLE

(30) Priorität: 09.12.2019 DE 102019133524
(43) Veröffentlichungstag der Anmeldung: 16.06.2021
(73) Patentinhaber: Amazonen-Werke H. Dreyer SE & Co. KG, 49205 Hasbergen (DE)
(72) Erfinder: Kleine-Hartlage, Hubertus, 49186 Bad Iburg (DE); Dieckmann, Michael, 48161 Münster (DE)

(56) Entgegenhaltungen:
- EP-A1- 0 221 031
- EP-A1- 2 014 528
- EP-A1- 3 312 066
- EP-A1- 3 450 270
- DE-A1-102017 115 460

## Beschreibung

Die Erfindung betrifft ein landwirtschaftliches Anhängefahrzeug nach dem Oberbegriff des Patentanspruchs 1 und ein Verfahren zum lastabhängigen Abbremsen eines landwirtschaftlichen Anhängefahrzeugs nach dem Oberbegriff des Patentanspruchs 13.

Landwirtschaftliche Anhängefahrzeuge sind regelmäßig mit einem eigenen Bremssystem ausgestattet, über welches das Anhängefahrzeug verzögert werden kann. Bei Anhängefahrzeugen mit einer beladbaren Materialaufnahmevorrichtung, wie beispielsweise einem mit Material beladbaren Vorratsbehälter, ist die während eines Bremsvorgangs erzeugte Bremskraft an den Beladungszustand des Anhängefahrzeugs anzupassen. In diesem Zusammenhang ist es bekannt, Anhängefahrzeuge mit Bremssystemen auszustatten, welche einen lastabhängigen Bremskraftregler aufweisen. Über den Bremskraftregler wird der aktuelle Beladungszustand des Anhängefahrzeugs bei der Bremskrafteinstellung berücksichtigt.

Der Beladungszustand des Anhängefahrzeugs wird daher bisher über den Federweg einer Achsfederung des Anhängefahrzeugs ermittelt. Ferner ist es bekannt, den Beladungszustand mittels Füllstandssensoren oder Wiegezellen zu ermitteln und einem elektronischen Bremssystem ein elektronisches Füllstands-oder Wiegesignal zur Umsetzung der lastabhängigen Bremskraftregelung bereitzustellen.

Aus der Druckschrift EP 2 014 528 B1 ist beispielsweise ein Anhängefahrzeug bekannt, bei welchem der Bremskraftregler in Abhängigkeit eines Füllstands eines Vorratsbehälters einstellbar ist, wobei der Füllstand des Vorratsbehälters sensorisch erfasst wird.

Bei diesen und anderen Lösungen der Erfassung des Beladungszustands des Anhängefahrzeugs ist die Verwendung von Messsensoren erforderlich, um eine lastabhängige Bremskraftregelung umsetzen zu können. Entsprechende sensorbasierte lastabhängige Bremskraftregelungen sind vergleichsweise fehleranfällig und weisen aufgrund der erforderlichen Messsensorik hohe Produktionskosten auf.

Die der Erfindung zugrundeliegende Aufgabe besteht somit darin, die lastabhängige Bremskraftregelung an einem landwirtschaftlichen Anhängefahrzeug zu vereinfachen, sodass die Produktionskosten verringert werden.

Die Aufgabe wird gelöst durch ein landwirtschaftliches Anhängefahrzeug der eingangs genannten Art, wobei der Bremskraftregler des erfindungsgemäßen Anhängefahrzeugs mit dem Fluidzylinder gekoppelt und dazu eingerichtet ist, eine Einstellung einer Bremskraft in Abhängigkeit des Fluiddrucks des Fluidzylinders zu veranlassen.

Die Erfindung macht sich die Erkenntnis zunutze, dass der Beladungszustand eines Anhängefahrzeugs auch über den Fluiddruck eines Fluidzylinders, welcher an der Deichsel angelenkt und dessen Fluiddruck von dem Beladungszustand der Materialaufnahmevorrichtung abhängig ist, ermittelbar ist. Dadurch, dass die Einstellung der Bremskraft in Abhängigkeit des Fluiddrucks des Fluidzylinders veranlasst wird, erfolgt somit die Bremskrafteinstellung auch in Abhängigkeit des Beladungszustands des Anhängefahrzeugs. Es sind folglich keine Füllstandssensoren, keine Erfassung des Federwegs an den Achsfederungen und keine gesonderten elektronischen Signalverarbeitungseinrichtungen erforderlich, um die lastabhängige Bremskraftregelung umsetzen zu können.

Das landwirtschaftliche Anhängefahrzeug ist vorzugsweise eine gezogene Arbeitsmaschine. Insbesondere ist das landwirtschaftliche Anhängefahrzeug ein gezogener Zentrifugaldüngerstreuer. Das landwirtschaftliche Anhängefahrzeug kann ein Ein- oder Zwei-Achs-Anhänger, ein Tandemanhänger, ein Muldenanhänger, ein Abschiebeanhänger oder ein Plateauanhänger sein.

In einer bevorzugten Ausführungsform des erfindungsgemäßen landwirtschaftlichen Anhängefahrzeugs weist das Bremssystem eine Ventileinheit und eine oder mehrere Radbremseinheiten auf, wobei die Ventileinheit fluidleitend mit der einen oder den mehreren Radbremseinheiten verbunden ist und der Bremskraftregler den Betrieb der Ventileinheit steuert. Da der Bremskraftregler den Betrieb der Ventileinheit steuert, erfolgt der Betrieb der Ventileinheit in Abhängigkeit des Fluiddrucks des Fluidzylinders. Die Ventileinheit stellt vorzugsweise das Anhängerbremsventil des landwirtschaftlichen Anhängefahrzeugs dar. Die Ventileinheit ist vorzugsweise über eine Versorgungsleitung verbindbar. Insbesondere ist die Ventileinheit mit einem Druckluftspeicher des landwirtschaftlichen Anhängefahrzeugs verbunden und dazu eingerichtet, den Druckluftspeicher mit Druckluft zu befüllen, welche der Ventileinheit über die Versorgungsleitung von dem Zugfahrzeug bereitgestellt wird. Die Befüllung des Druckluftspeichers erfolgt vorzugsweise, wenn kein Bremsvorgang am landwirtschaftlichen Anhängefahrzeug ausgeführt wird. Die Druckluft aus dem Druckluftspeicher steht somit zur Betätigung der einen oder der mehreren Radbremseinheiten beim Ausführen von Bremsvorgängen zur Verfügung. Die eine oder die mehreren Radbremseinheiten dienen zum Abbremsen der Räder des landwirtschaftlichen Anhängefahrzeugs.

Das erfindungsgemäße landwirtschaftliche Anhängefahrzeug wird ferner dadurch vorteilhaft weitergebildet, dass der Bremskraftregler über eine Steuerluftleitung mit einem Druckluftsystem des Zugfahrzeugs verbindbar ist, sodass eine von dem Zugfahrzeug bereitgestellte Steuerdruckluft in den Bremskraftregler einleitbar ist. Vorzugsweise ist der Bremskraftregler dazu eingerichtet, den Luftdruck der Steuerdruckluft in Abhängigkeit des Fluiddrucks des Fluidzylinders anzupassen und die druckangepasste Steuerdruckluft aus dem Bremskraftregler auszuleiten. Wenn der Fahrer des Zugfahrzeugs das Bremspedal betätigt, sorgt ein Anhängersteuerventil am Zugfahrzeug dafür, dass der Luftdruck einer dem landwirtschaftlichen Anhängefahrzeug bereitgestellten Steuerdruckluft ansteigt. Die Steuerdruckluft wird dann nicht direkt der Ventileinheit, sondern zunächst dem Bremskraftregler bereitgestellt, welcher eine Druckanpassung der Steuerdruckluft in Abhängigkeit des Fluiddrucks des Fluidzylinders vornimmt, sodass der Beladungszustand des Anhängefahrzeugs durch die Druckanpassung der Steuerdruckluft berücksichtigt wird.

In einer Weiterbildung des erfindungsgemäßen landwirtschaftlichen Anhängefahrzeugs sind der Bremskraftregler und die Ventileinheit über eine Verbindungsleitung fluidleitend miteinander verbunden. Über die Verbindungsleitung ist der Ventileinheit die druckangepasste Steuerdruckluft bereitstellbar, wobei die Ventileinheit dazu eingerichtet ist, eine Druckluftbeaufschlagung der einen oder der mehreren Radbremseinheiten über die druckangepasste Steuerdruckluft zu steuern. Die Betätigung der einen oder der mehreren Radbremseinheiten erfolgt somit in Abhängigkeit der druckangepassten Steuerdruckluft, sodass die Betätigung der einen oder der mehreren Radbremseinheiten von dem Beladungszustand des Anhängefahrzeugs abhängig ist.

In einer Weiterbildung des erfindungsgemäßen landwirtschaftlichen Anhängefahrzeugs weist die beladbare Materialaufnahmevorrichtung einen mit einem Material beladbaren Vorratsbehälter oder eine mit Material beladbare Ladefläche auf. Das landwirtschaftliche Anhängefahrzeug kann eine Ausbringmaschine zum Ausbringen des in einem Vorratsbehälter befindlichen Materials auf eine landwirtschaftliche Nutzfläche sein. Beispielsweise ist das landwirtschaftliche Anhängefahrzeug eine Streumaschine, eine Feldspritze oder eine Sämaschine. In diesen Fällen verändert sich der Beladungszustand des Anhängefahrzeugs während der Materialausbringung. Über den Fluiddruck des zumindest einen Fluidzylinders wird die Änderung des Beladungszustands kontinuierlich erfasst, sodass eine präzise lastabhängige Bremskraftregelung auch während einer Materialausbringung umgesetzt wird.

In einer anderen Ausführungsform des erfindungsgemäßen landwirtschaftlichen Anhängefahrzeugs ist der Fluidzylinder an einem Rahmen oder einem Aufbau des Anhängefahrzeugs angelenkt. Dadurch, dass der Fluidzylinder zwischen der Deichsel des Anhängefahrzeugs und dem Rahmen oder dem Aufbau des Anhängefahrzeugs angelenkt ist, kann der Beladungszustand des Anhängefahrzeugs präzise über den Fluidzylinders erfasst werden.

Das erfindungsgemäße landwirtschaftliche Anhängefahrzeug wird ferner durch einen Druckaufnehmer vorteilhaft weitergebildet, welcher dazu eingerichtet ist, den Fluiddruck des Fluidzylinders zu erfassen. Über den Druckaufnehmer lässt sich ein Drucksignal erzeugen, auf dessen Grundlage die Druckanpassung der Steuerdruckluft erfolgen kann. Das Drucksignal des Druckaufnehmers kann auch dazu verwendet werden, dem Fahrer des Zugfahrzeugs den aktuellen Beladungszustand des Anhängefahrzeugs anzuzeigen.

Darüber hinaus ist ein erfindungsgemäßes landwirtschaftliches Anhängefahrzeug vorteilhaft, bei welchem der Druckaufnehmer an dem oder in dem Fluidzylinder angeordnet ist und über eine signalleitende Verbindung mit dem Bremskraftregler verbunden ist. In diesem Fall ist keine Fluidverbindung zwischen dem Fluidzylinder und dem Bremskraftregler erforderlich. Beispielsweise weist der Bremskraftregler einen Signaleingang auf, an welchem die signalleitende Verbindung angeschlossen ist. Der Bremskraftregler ist in diesem Fall vorzugsweise dazu eingerichtet, ein elektrisches Drucksignal zum Veranlassen der lastabhängigen Einstellung der Bremskraft zu verarbeiten.

In einer Weiterbildung des erfindungsgemäßen landwirtschaftlichen Anhängefahrzeugs ist der Druckaufnehmer an dem oder in dem Bremskraftregler angeordnet und der Fluidzylinder über eine Fluidleitung mit dem Druckaufnehmer an dem oder in dem Bremskraftregler verbunden. Beispielsweise weist der Bremskraftregler einen Steuerdruckanschluss auf, an welchem die Fluidleitung angeschlossen ist. Der Bremskraftregler ist in diesem Fall vorzugsweise dazu eingerichtet, ein hydraulisches Eingangssignal zum Veranlassen der lastabhängigen Einstellung der Bremskraft zu verarbeiten.

In einer anderen Ausführungsform des erfindungsgemäßen landwirtschaftlichen Anhängefahrzeugs ist der Fluidzylinder als Hydraulikzylinder ausgebildet. Der Fluidzylinder kann ein einfach-wirkender oder ein doppeltwirkender Zylinder sein. Das Anhängefahrzeug kann auch mehrere, beispielsweise zwei, Fluidzylinder aufweisen, welche an der Deichsel angelenkt sind und deren Fluiddruck von dem Beladungszustand der Materialaufnahmevorrichtung abhängig ist.

In einer Weiterbildung weist das erfindungsgemäße landwirtschaftliche Anhängefahrzeug eine hydraulische Deichselfederung auf, wobei der Fluidzylinder ein Bestandteil der hydraulischen Deichselfederung ist. Die Deichsel ist folglich eine hydraulisch gefederte Deichsel. Die hydraulische Deichselfederung dämpft während der Fahrt Stöße und Schläge, welche über die Deichsel auf das Zugfahrzeug übertragen werden. Durch die hydraulische Deichselfederung wird folglich der Fahrkomfort am Zugfahrzeug gesteigert.

Es ist darüber hinaus ein erfindungsgemäßes landwirtschaftliches Anhängefahrzeug vorteilhaft, welches eine hydraulische Verstelleinrichtung für die Deichsel aufweist, wobei der Fluidzylinder ein Bestandteil der hydraulischen Verstelleinrichtung für die Deichsel ist. Über die hydraulische Verstelleinrichtung kann beispielsweise die Höhe und/oder Neigung der Deichsel eingestellt und an die Höhe der Anhängerkupplung des Zugfahrzeugs angepasst werden. Über die hydraulische Verstelleinrichtung kann somit die Anhängehöhe des Anhängefahrzeugs eingestellt werden. Die Deichsel ist durch die hydraulische Verstelleinrichtung vorzugsweise als Knickdeichsel ausgebildet. Die hydraulische Verstelleinrichtung ist vorzugsweise fluidleitend mit einem Hydrauliksystem des Zugfahrzeugs verbindbar.

Die der Erfindung zugrundeliegende Aufgabe wird ferner durch ein Verfahren der eingangs genannten Art gelöst, wobei im Rahmen des erfindungsgemäßen Verfahrens das Veranlassen des Einstellens der Bremskraft in Abhängigkeit des Fluiddrucks des Fluidzylinders erfolgt. Mit dem Verfahren wird vorzugsweise ein landwirtschaftliches Anhängefahrzeug nach einer der vorstehend beschriebenen Ausführungsformen lastabhängig abgebremst. Hinsichtlich der Vorteile und Modifikationen des erfindungsgemäßen Verfahrens wird somit zunächst auf die Vorteile und Modifikationen des erfindungsgemäßen landwirtschaftlichen Anhängefahrzeugs verwiesen.

In einer bevorzugten Ausführungsform des erfindungsgemäßen Verfahrens wird einer Ventileinheit des Anhängefahrzeugs Druckluft durch ein Druckluftsystem des Zugfahrzeugs bereitgestellt. Vorzugsweise wird einer oder mehreren Radbremseinheiten des Anhängefahrzeugs Druckluft durch die Ventileinheit bereitgestellt. Insbesondere erfolgt ein Steuern des Betriebs der Ventileinheit mittels des Bremskraftreglers. Die Ventileinheit ist vorzugsweise über eine Versorgungsleitung mit dem Druckluftsystem des Zugfahrzeugs verbunden, wobei die Druckluft zum Befüllen eines Druckluftspeichers des Anhängefahrzeugs verwendet wird, wenn kein Bremsvorgang ausgeführt wird. Ein Bereitstellen der Druckluft für die eine oder die mehreren Radbremseinheiten erfolgt dann beim Ausführen eines Bremsvorgangs. Das Steuern des Betriebs der Ventileinheit mittels des Bremskraftreglers umfasst vorzugsweise das Einstellen der der einen oder den mehreren Radbremseinheiten zugeleiteten Druckluft in Abhängigkeit des Fluiddrucks des Fluidzylinders.

In einer weiteren bevorzugten Ausführungsform des erfindungsgemäßen Verfahrens wird Steuerdruckluft aus einem Druckluftsystem des Zugfahrzeugs in den Bremskraftregler eingeleitet, der Luftdruck der Steuerdruckluft durch den Bremskraftregler in Abhängigkeit des Fluiddrucks des Fluidzylinders angepasst und die druckangepasste Steuerdruckluft aus dem Bremskraftregler ausgeleitet. Vorzugsweise umfasst das Verfahren das Einleiten der druckangepassten Steuerdruckluft in die Ventileinheit über eine Verbindungsleitung zwischen dem Bremskraftregler und der Ventileinheit und/oder das Steuern einer Druckluftbeaufschlagung der einen oder der mehreren Radbremseinheiten über die druckangepasste Steuerdruckluft durch die Ventileinheit.

In einer bevorzugten Weiterbildung des erfindungsgemäßen Verfahrens wird der Fluiddruck des Fluidzylinders mittels eines Druckaufnehmers des Anhängefahrzeugs erfasst. Vorzugsweise wird der Fluiddruck des Fluidzylinders direkt am oder im Fluidzylinder erfasst und dem Bremskraftregler wird ein den erfassten Fluiddruck betreffendes elektrisches Drucksignal von dem Druckaufnehmer bereitgestellt. Alternativ ist der Fluidzylinder über eine Fluidleitung mit dem den Druckaufnehmer umfassenden Bremskraftregler verbunden und der Fluiddruck des Fluidzylinders wird am Bremskraftregler erfasst.

In einer weiteren bevorzugten Ausführungsform des erfindungsgemäßen Verfahrens erfolgt ein Abfedern der Deichsel mittels einer den Fluidzylinder umfassenden hydraulischen Deichselfederung des Anhängefahrzeugs und/oder ein Einstellen der Neigung und/oder der Höhe der Deichsel mittels einer den Fluidzylinder umfassenden hydraulischen Verstelleinrichtung des Anhängefahrzeugs.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Ausführungsbeispiel des erfindungsgemäßen Anhängefahrzeugs in einer perspektivischen Darstellung; und
- Fig. 2: das Bremssystem des in der Fig. 1 abgebildeten Anhängefahrzeugs in einer Seitenansicht.

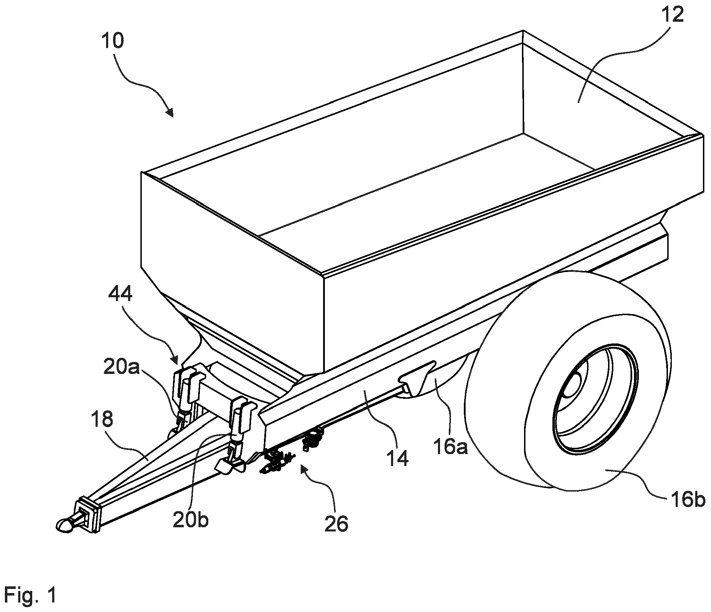

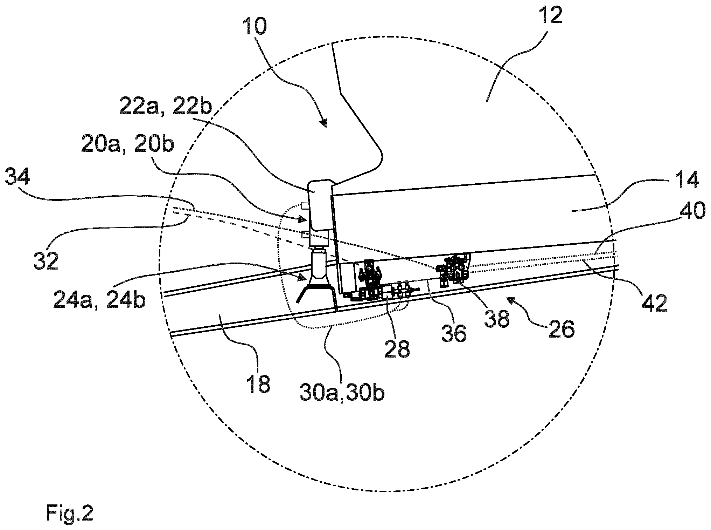

Die Fig. 1 und 2 zeigen ein als einachsigen Muldenanhänger ausgebildetes landwirtschaftliches Anhängefahrzeug 10. Das landwirtschaftliche Anhängefahrzeug 10 weist eine beladbare Materialaufnahmevorrichtung 12 auf, wobei die beladbare Materialaufnahmevorrichtung 12 einen mit Material beladbaren Vorratsbehälter aufweist. Die Materialaufnahmevorrichtung 12 ist auf einem Rahmen 14 des Anhängefahrzeugs 10 befestigt. An dem Rahmen 14 ist das die Räder 16a, 16b umfassende Fahrwerk des Anhängefahrzeugs 10 befestigt. Die Räder 16a, 16b sind mit pneumatisch angesteuerten Radbremseinheiten ausgestattet, über welche die Räder 16a, 16b gebremst werden können.

Das landwirtschaftliche Anhängefahrzeug 10 weist ferner eine Deichsel 18 zum Anhängen des Anhängefahrzeugs 10 an eine Anhängerkupplung eines Zugfahrzeugs auf. Das Zugfahrzeug kann beispielsweise ein Schlepper bzw. ein Traktor sein. Zwischen dem Rahmen 14 und der Deichsel 18 sind zwei im Wesentlichen parallel zueinander ausgerichtete Fluidzylinder 20a, 20b angeordnet. Die Fluidzylinder 20a, 20b sind Hydraulikzylinder und über die Anlenkbleche 22a, 22b an dem Rahmen 14 und über die Befestigungselemente 24a, 24b an der Deichsel 18 angelenkt. Die Fluidzylinder 20a, 20b können einfach-wirkende oder doppeltwirkende Zylinder sein.

Über die Fluidzylinder 20a, 20b wird eine hydraulische Deichselfederung umgesetzt, wobei die Fluidzylinder 20a, 20b außerdem Bestandteil einer hydraulischen Verstelleinrichtung 44 für die Deichsel 18 sind. Über die hydraulische Verstelleinrichtung 44 kann die Höhe und die Neigung der Deichsel 18 eingestellt und an die Höhe der Anhängerkupplung des Zugfahrzeugs angepasst werden. Über die hydraulische Verstelleinrichtung 44 kann somit die Anhängehöhe des Anhängefahrzeugs 10 eingestellt werden. Durch die hydraulische Verstelleinrichtung 44 ist die Deichsel 18 als Knickdeichsel ausgeführt. Die Fluidzylinder 20a, 20b sind fluidleitend mit einem Hydrauliksystem des Zugfahrzeugs verbindbar, sodass über die Hydraulikflüssigkeit die Höhe und/oder Neigung der Deichsel 18 eingestellt werden kann.

Der Fluiddruck der Fluidzylinder 20a, 20b ist von dem Beladungszustand der Materialaufnahmevorrichtung 12 abhängig. Mit zunehmender Beladung der Materialaufnahmevorrichtung steigt der Fluiddruck der Fluidzylinder 20a, 20b an. Wenn die Beladung der Materialaufnahmevorrichtung 12 abnimmt, fällt der Fluiddruck der Fluidzylinder 20a, 20b ab.

Das landwirtschaftliche Anhängefahrzeug 10 umfasst ein Bremssystem 26, welches einen lastabhängigen Bremskraftregler 28 aufweist. Der Bremskraftregler 28 ist mit den Fluidzylindern 20a, 20b gekoppelt und veranlasst die Einstellung einer Bremskraft in Abhängigkeit des Fluiddrucks der Fluidzylinder 20a, 20b. Dadurch, dass die Bremskraft in Abhängigkeit des Fluiddrucks der Fluidzylinder 20a, 20b eingestellt wird, erfolgt die Bremskrafteinstellung in Abhängigkeit des Beladungszustands des Anhängefahrzeugs 10. Es sind folglich keine Füllstandssensoren oder gesonderte elektronische Datenverarbeitungseinrichtungen erforderlich, um eine lastabhängige Bremskraftregelung umzusetzen.

Die Fluidzylinder 20a, 20b sind über Fluidleitungen 30a, 30b mit dem Bremskraftregler 28 verbunden. Der Bremskraftregler 28 ist ferner über eine Steuerluftleitung 32 mit einem Druckluftsystem des Zugfahrzeugs verbunden, sodass eine von dem Zugfahrzeug bereitgestellte Steuerdruckluft in den Bremskraftregler 28 eingeleitet wird. Der Bremskraftregler 28 passt den Luftdruck der Steuerdruckluft in Abhängigkeit des Fluiddrucks der Fluidzylinder 20a, 20b an. Die erzeugte druckangepasste Steuerdruckluft berücksichtigt aufgrund der vorhergehenden Druckanpassung in Abhängigkeit des Fluiddrucks der Fluidzylinder 20a, 20b den Beladungszustand der Materialaufnahmevorrichtung 12.

Die druckangepasste Steuerdruckluft wird dann einer Ventileinheit 38 des Bremssystems 26 über die Verbindungsleitung 36 zugeleitet. Die Ventileinheit 38 ist ein Anhängerbremsventil und über die Bremsleitung 40 mit den pneumatisch betriebenen Radbremseinheiten der Räder 16a, 16b verbunden. Die Ventileinheit 38 ist außerdem über eine Versorgungsleitung 34 mit dem Druckluftsystem des Zugfahrzeugs verbunden, wobei der Ventileinheit 38 über die Versorgungsleitung 34 Druckluft bereitgestellt wird, welche zum Befüllen eines Druckluftspeichers genutzt wird. Der Druckluftspeicher ist über die Behälterverbindung 42 mit der Ventileinheit 38 verbunden.

Über die druckangepasste Steuerdruckluft steuert der Bremskraftregler 28 den Betrieb der Ventileinheit 38. Die Ventileinheit 38 ist dazu eingerichtet, eine Druckluftbeaufschlagung der Radbremseinheiten der Räder 16a, 16b über die druckangepasste Steuerdruckluft zu steuern. Die Druckluftbeaufschlagung der Radbremseinheiten ist somit abhängig von dem Beladungszustand der Materialaufnahmevorrichtung 12.

An dem oder in dem Bremskraftregler 28 können Druckaufnehmer angeordnet sein, über welche der Fluiddruck der Fluidzylinder 20a, 20b erfasst werden kann. Vorzugsweise umfasst der Bremskraftregler hierfür Steuerdruckanschlüsse, an welche die Fluidleitungen 30a, 30b angeschlossen sind. Der Bremskraftregler 28 ist in diesem Fall vorzugsweise dazu eingerichtet, ein hydraulisches Eingangssignal zur lastabhängigen Einstellung der Bremskraft zu verarbeiten.

Alternativ zu den dargestellten Fluidleitungen 30a, 30b können die Fluidzylinder 20a, 20b auch signalübertragend mit dem Bremskraftregler 28 verbunden sein. In diesem Fall sind an den oder in den Fluidzylindern 20a, 20b Druckaufnehmer angeordnet, welche ein elektrisches Drucksignal erzeugen. In diesem Fall weist der Bremskraftregler 28 Signaleingänge auf, an welchen die von den Fluidzylindern 20a, 20b kommenden Signalleitungen angeschlossen sind.

In einer weiteren Ausführungsform wird auf die Verwendung entsprechender Druckaufnehmer verzichtet. In diesem Fall ist der Bremskraftregler 28 dazu eingerichtet, die Fluiddrücke der Fluidzylinder 20a, 20b direkt zur Druckanpassung der Steuerdruckluft zu verwenden.

### Bezugszeichenliste

- 10: Anhängefahrzeug
- 12: Materialaufnahmevorrichtung
- 14: Rahmen
- 16a, 16b: Räder
- 18: Deichsel
- 20a, 20b: Fluidzylinder
- 22a, 22b: Anlenkbleche
- 24a, 24b: Befestigungselemente
- 26: Bremssystem
- 28: Bremskraftregler
- 30a, 30b: Fluidleitungen
- 32: Steuerluftleitung
- 34: Versorgungsleitung
- 36: Verbindungsleitung
- 38: Ventileinheit
- 40: Bremsleitung
- 42: Behälterverbindung
- 44: Verstelleinrichtung

## Patentansprüche

1. Landwirtschaftliches Anhängefahrzeug (10), mit
- einer beladbaren Materialaufnahmevorrichtung (12);
- einer Deichsel (18) zum Anhängen des Anhängefahrzeugs (10) an eine Anhängerkupplung eines Zugfahrzeugs;
- einem Bremssystem (26), welches einen lastabhängigen Bremskraftregler (28) aufweist;
Z **gekennzeichnet durch** zumindest einem Fluidzylinder (20a, 20b), welcher an der Deichsel (18) angelenkt und dessen Fluiddruck von dem Beldaungszustand der Materialaufnahmevorrichtung (12) abhängig ist; und **dadurch, dass** der Bremskraftregler (28) mit dem Fluidzylinder (20a, 20b) gekoppelt und dazu eingerichtet ist, eine Einstellung einer Bremskraft in Abhängigkeit des Fluiddrucks des Fluidzylinders (20a, 20b) zu veranlassen.

2. Landwirtschaftliches Anhängefahrzeug (10) nach Anspruch 1,
**dadurch gekennzeichnet, dass** das Bremssystem (26) eine Ventileinheit (38) und eine oder mehrere Radbremseinheiten aufweist, wobei die Ventileinheit (38) fluidleitend mit der einen oder den mehreren Radbremseinheiten verbunden ist und der Bremskraftregler (28) den Betrieb der Ventileinheit (38) steuert.

3. Landwirtschaftliches Anhängefahrzeug (10) nach Anspruch 1 oder 2,
**dadurch gekennzeichnet, dass** der Bremskraftregler (28) über eine Steuerluftleitung (32) mit einem Druckluftsystem des Zugfahrzeugs verbindbar ist, sodass eine von dem Zugfahrzeug bereitgestellte Steuerdruckluft in den Bremskraftregler (28) einleitbar ist, wobei der Bremskraftregler (28) dazu eingerichtet ist, den Luftdruck der Steuerdruckluft in Abhängigkeit des Fluiddrucks des Fluidzylinders (20a, 20b) anzupassen und die druckangepasste Steuerdruckluft aus dem Bremskraftregler (28) auszuleiten.

4. Landwirtschaftliches Anhängefahrzeug (10) nach einem der vorstehenden Ansprüche,
**dadurch gekennzeichnet, dass** der Bremskraftregler (28) und die Ventileinheit (38) über eine Verbindungsleitung (36) fluidleitend miteinander verbunden sind, über welche der Ventileinheit (38) die druckangepasste Steuerdruckluft bereitstellbar ist, wobei die Ventileinheit (38) dazu eingerichtet ist, eine Druckluftbeaufschlagung der einen oder der mehreren Radbremseinheiten über die druckangepasste Steuerdruckluft zu steuern.

5. Landwirtschaftliches Anhängefahrzeug (10) nach einem der vorstehenden Ansprüche,
**dadurch gekennzeichnet, dass** die beladbare Materialaufnahmevorrichtung (12) einen mit einem Material beladbaren Vorratsbehälter oder eine mit einem Material beladbare Ladefläche aufweist.

6. Landwirtschaftliches Anhängefahrzeug (10) nach einem der vorstehenden Ansprüche,
**dadurch gekennzeichnet, dass** der Fluidzylinder (20a, 20b) an einem Rahmen (14) oder einem Aufbau des Anhängefahrzeugs (10) angelenkt ist.

7. Landwirtschaftliches Anhängefahrzeug (10) nach einem der vorstehenden Ansprüche,
**gekennzeichnet durch** einen Druckaufnehmer, welcher dazu eingerichtet ist, den Fluiddruck des Fluidzylinders (20a, 20b) zu erfassen.

8. Landwirtschaftliches Anhängefahrzeug (10) nach Anspruch 7,
**dadurch gekennzeichnet, dass** der Druckaufnehmer an dem oder in dem Fluidzylinder (20a, 20b) angeordnet ist und über eine signalleitende Verbindung mit dem Bremskraftregler (28) verbunden ist.

9. Landwirtschaftliches Anhängefahrzeug (10) nach Anspruch 7,
**dadurch gekennzeichnet, dass** der Druckaufnehmer an dem oder in dem Bremskraftregler (28) angeordnet ist und der Fluidzylinder (20a, 20b) über eine Fluidleitung (30a, 30b) mit dem Druckaufnehmer an dem oder in dem Bremskraftregler (28) verbunden ist.

10. Landwirtschaftliches Anhängefahrzeug (10) nach einem der vorstehenden Ansprüche,
**dadurch gekennzeichnet, dass** der Fluidzylinder (20a, 20b) als Hydraulikzylinder ausgebildet ist.

11. Landwirtschaftliches Anhängefahrzeug (10) nach einem der vorstehenden Ansprüche,
**gekennzeichnet durch** eine hydraulische Deichselfederung, wobei der Fluidzylinder (20a, 20b) ein Bestandteil der hydraulischen Deichselfederung ist.

12. Landwirtschaftliches Anhängefahrzeug (10) nach einem der vorstehenden Ansprüche,
**gekennzeichnet durch** eine hydraulische Verstelleinrichtung (44) für die Deichsel (18), wobei der Fluidzylinder (20a, 20b) ein Bestandteil der hydraulischen Verstelleinrichtung (44) für die Deichsel (18) ist.

13. Verfahren zum lastabhängigen Abbremsen eines landwirtschaftlichen Anhängefahrzeugs (10), insbesondere eines landwirtschaftlichen Anhängefahrzeugs (10) nach einem der vorstehenden Ansprüche, wobei das Anhängefahrzeug (10) über eine Deichsel (18) an eine Anhängerkupplung eines Zugfahrzeugs angehangen ist und zumindest einen Fluidzylinder (20a, 20b) aufweist, welcher an der Deichsel (18) angelenkt und dessen Fluiddruck von dem Beladungszustand einer beladbaren Materialaufnahmevorrichtung (12) des Anhängefahrzeugs (10) abhängig ist, mit dem Schritt:
- Veranlassen des Einstellens einer lastabhängigen Bremskraft mittels eines Bremskraftreglers (28) eines Bremssystems (26) des Anhängefahrzeugs (10);
**dadurch gekennzeichnet, dass** das Veranlassen des Einstellens der Bremskraft in Abhängigkeit des Fluiddrucks des Fluidzylinders (20a, 20b) erfolgt.

14. Verfahren nach Anspruch 13,
**gekennzeichnet durch** zumindest einen der folgenden Schritte:
- Bereitstellen von Druckluft für eine Ventileinheit (38) des Anhängefahrzeugs (10) durch ein Druckluftsystem des Zugfahrzeugs;
- Bereitstellen von Druckluft für eine oder mehrere Radbremseinheiten des Anhängefahrzeugs (10) durch die Ventileinheit (38);
- Steuern des Betriebs der Ventileinheit (38) mittels des Bremskraftreglers (28).

15. Verfahren nach Anspruch 13 oder 14,
**gekennzeichnet durch** zumindest einen der folgenden Schritte:
- Einleiten von Steuerdruckluft aus einem Druckluftsystem des Zugfahrzeugs in den Bremskraftregler (28);
- Anpassen des Luftdrucks der Steuerdruckluft durch den Bremskraftregler (28) in Abhängigkeit des Fluiddrucks des Fluidzylinders (20a, 20b)
- Ausleiten der druckangepassten Steuerdruckluft aus dem Bremskraftregler (28);
- Einleiten der druckangepassten Steuerdruckluft über eine Verbindungsleitung (36) zwischen dem Bremskraftregler (28) und der Ventileinheit (38) in die Ventileinheit (38);
- Steuern einer Druckluftbeaufschlagung der einen oder der mehreren Radbremseinheiten über die druckangepasste Steuerdruckluft durch die Ventileinheit (38).

16. Verfahren nach einem der Ansprüche 13 bis 15,
**gekennzeichnet durch** den Schritt:
- Erfassen des Fluiddrucks des Fluidzylinders (20a, 20b) mittels eines Druckaufnehmers des Anhängefahrzeugs (10);
wobei der Fluiddruck des Fluidzylinders (20a, 20b) vorzugsweise direkt am oder im Fluidzylinder (20a, 20b) erfasst und dem Bremskraftregler (28) ein den erfassten Fluidruck betreffendes elektrisches Drucksignal von dem Druckaufnehmer bereitgestellt wird; oder
wobei der Fluidzylinder (20a, 20b) vorzugsweise über eine Fluidleitung (30a, 30b) mit dem den Druckaufnehmer umfassenden Bremskraftregler (28) verbunden ist und der Fluiddruck des Fluidzylinders (20a, 20b) am Bremskraftregler (28) erfasst wird.

17. Verfahren nach einem der Ansprüche 13 bis 16,
**gekennzeichnet durch** zumindest einen der folgenden Schritte:
- Abfedern der Deichsel (18) mittels einer den Fluidzylinder (20a, 20b) umfassenden hydraulischen Deichselfederung des Anhängefahrzeugs (10);
- Einstellen der Neigung und/oder der Höhe der Deichsel (18) mittels einer den Fluidzylinder (20a, 20b) umfassenden hydraulischen Verstelleinrichtung (44) des Anhängefahrzeugs (10).

## Claims

1. Agricultural trailer vehicle (10), having
- a loadable material receiving apparatus (12);
- a drawbar (18) for hitching the trailer vehicle (10) to a towbar of a towing vehicle;
- a brake system (26) which has a load-dependent braking force regulator (28);
**characterized by** at least one fluid cylinder (20a, 20b) which is articulated to the drawbar (18) and the fluid pressure of which is dependent on the state of loading of the material receiving apparatus (12); and in that the braking force regulator (28) is coupled to the fluid cylinder (20a, 20b) and is designed to induce setting of a braking force depending on the fluid pressure of the fluid cylinder (20a, 20b).

2. Agricultural trailer vehicle (10) according to Claim 1,
**characterized in that** the brake system (26) has a valve unit (38) and one or more wheel brake units, wherein the valve unit (38) is fluidically connected to the one or more wheel brake units and the braking force regulator (28) controls the operation of the valve unit (38).

3. Agricultural trailer vehicle (10) according to Claim 1 or 2,
**characterized in that** the braking force regulator (28) is connectable to a compressed-air system of the towing vehicle via a control air line (32) such that compressed control air provided by the towing vehicle is able to be introduced into the braking force regulator (28), wherein the braking force regulator (28) is designed to adapt the air pressure of the compressed control air depending on the fluid pressure of the fluid cylinder (20a, 20b) and to conduct the pressure-adapted compressed control air out of the braking force regulator (28) .

4. Agricultural trailer vehicle (10) according to one of the preceding claims,
**characterized in that** the braking force regulator (28) and the valve unit (38) are connected fluidically together via a connecting line (36) via which the pressure-adapted compressed control air is able to be provided to the valve unit (38), wherein the valve unit (38) is designed to control admission of compressed air to the one or more wheel brake units via the pressure-adapted control compressed air.

5. Agricultural trailer vehicle (10) according to one of the preceding claims,
**characterized in that** the loadable material receiving apparatus (12) has a storage container that is loadable with a material or has a loading area that is loadable with a material.

6. Agricultural trailer vehicle (10) according to one of the preceding claims,
**characterized in that** the fluid cylinder (20a, 20b) is articulated to a frame (14) or a structure of the trailer vehicle (10).

7. Agricultural trailer vehicle (10) according to one of the preceding claims,
**characterized by** a pressure transducer which is designed to sense the fluid pressure of the fluid cylinder (20a, 20b).

8. Agricultural trailer vehicle (10) according to Claim 7,
**characterized in that** the pressure transducer is arranged on or in the fluid cylinder (20a, 20b) and is connected to the braking force regulator (28) via a signal-conducting connection.

9. Agricultural trailer vehicle (10) according to Claim 7,
**characterized in that** the pressure transducer is arranged on or in the braking force regulator (28) and the fluid cylinder (20a, 20b) is connected to the pressure transducer on or in the braking force regulator (28) via a fluid line (30a, 30b).

10. Agricultural trailer vehicle (10) according to one of the preceding claims,
**characterized in that** the fluid cylinder (20a, 20b) is in the form of a hydraulic cylinder.

11. Agricultural trailer vehicle (10) according to one of the preceding claims,
**characterized by** a hydraulic drawbar suspension, wherein the fluid cylinder (20a, 20b) is a constituent of the hydraulic drawbar suspension.

12. Agricultural trailer vehicle (10) according to one of the preceding claims,
**characterized by** a hydraulic adjustment device (44) for the drawbar (18), wherein the fluid cylinder (20a, 20b) is a constituent of the hydraulic adjustment device (44) for the drawbar (18).

13. Method for the load-dependent braking of an agricultural trailer vehicle (10), in particular of an agricultural trailer vehicle (10) according to one of the preceding claims, wherein the trailer vehicle (10) is hitched to a towbar of a towing vehicle via a drawbar (18) and has at least one fluid cylinder (20a, 20b) which is articulated to the drawbar (18) and the fluid pressure of which is dependent on the state of loading of a loadable material receiving apparatus (12) of the trailer vehicle (10), having the step of:
- initiating the setting of a load-dependent braking force by means of a braking force regulator (28) of a brake system (26) of the trailer vehicle (10);
**characterized in that** the initiation of the setting of the braking force takes place depending on the fluid pressure of the fluid cylinder (20a, 20b).

14. Method according to Claim 13,
**characterized by** at least one of the following steps of:
- providing compressed air for a valve unit (38) of the trailer vehicle (10) by way of a compressed air system of the towing vehicle;
- providing compressed air for one or more wheel brake units of the trailer vehicle (10) by way of the valve unit (38);
- controlling the operation of the valve unit (38) by means of the braking force regulator (28).

15. Method according to Claim 13 or 14,
**characterized by** at least one of the following steps of:
- introducing compressed control air from a compressed air system of the towing vehicle into the braking force regulator (28);
- adapting the air pressure of the compressed control air by way of the braking force regulator (28) depending on the fluid pressure of the fluid cylinder (20a, 20b);
- conducting the pressure-adapted compressed control air out of the braking force regulator (28);
- introducing the pressure-adapted compressed control air into the valve unit (38) via a connecting line (36) between the braking force regulator (28) and the valve unit (38);
- controlling admission of compressed air to the one or more wheel brake units via the pressure-adapted compressed control air by way of the valve unit (38).

16. Method according to one of Claims 13 to 15, **characterized by** the step of:
- sensing the fluid pressure of the fluid cylinder (20a, 20b) by means of a pressure transducer of the trailer vehicle (10);
wherein the fluid pressure of the fluid cylinder (20a, 20b) is sensed preferably directly on or in the fluid cylinder (20a, 20b) and an electric pressure signal relating to the sensed fluid pressure is provided to the braking force regulator (28) by the pressure transducer; or
wherein the fluid cylinder (20a, 20b) is connected, preferably via a fluid line (30a, 30b), to the braking force regulator (28) comprising the pressure transducer and the fluid pressure of the fluid cylinder (20a, 20b) is sensed at the braking force regulator (28).

17. Method according to one of Claims 13 to 16,
**characterized by** at least one of the following steps of:
- cushioning the drawbar (18) by means of a hydraulic drawbar suspension, comprising the fluid cylinder (20a, 20b), of the trailer vehicle (10);
- setting the inclination and/or the height of the drawbar (18) by means of a hydraulic adjustment device (44), comprising the fluid cylinder (20a, 20b), of the trailer vehicle (10).

## Revendications

1. Véhicule remorqué agricole (10), comprenant
- un dispositif de réception de matériau pouvant être chargé (12) ;
- un timon (18) pour accrocher le véhicule remorqué (10) à un attelage de remorque d'un véhicule tracteur ;
- un système de freinage (26), qui comprend un régulateur de force de freinage (28) dépendant de la charge ;
**caractérisé par** au moins un cylindre à fluide (20a, 20b), qui est articulé sur le timon (18) et dont la pression de fluide dépend de l'état de chargement du dispositif de réception de matériau (12) ; et en ce que le régulateur de force de freinage (28) est couplé au cylindre à fluide (20a, 20b) et est conçu pour induire un réglage d'une force de freinage en fonction de la pression de fluide du cylindre à fluide (20a, 20b).

2. Véhicule remorqué agricole (10) selon la revendication 1, **caractérisé en ce que** le système de freinage (26) présente une unité de soupape (38) et une ou plusieurs unités de freinage de roue, l'unité de soupape (38) étant reliée fluidiquement aux une ou plusieurs unités de freinage de roue et le régulateur de force de freinage (28) commandant le fonctionnement de l'unité de soupape (38).

3. Véhicule remorqué agricole (10) selon la revendication 1 ou 2, **caractérisé en ce que** le régulateur de force de freinage (28) peut être relié par l'intermédiaire d'une conduite d'air de commande (32) à un système d'air comprimé du véhicule tracteur, de telle sorte qu'un air comprimé de commande fourni par le véhicule tracteur peut être introduit dans le régulateur de force de freinage (28), le régulateur de force de freinage (28) étant conçu pour adapter la pression d'air de l'air comprimé de commande en fonction de la pression de fluide du cylindre à fluide (20a, 20b) et pour évacuer l'air comprimé de commande adapté en pression hors du régulateur de force de freinage (28).

4. Véhicule remorqué agricole (10) selon l'une quelconque des revendications précédentes, **caractérisé en ce que** le régulateur de force de freinage (28) et l'unité de soupape (38) sont reliés fluidiquement l'un à l'autre par l'intermédiaire d'une conduite de liaison (36), qui peut fournir à l'unité de soupape (38) l'air comprimé de commande adapté en pression, l'unité de soupape (38) étant conçue pour commander une alimentation en air comprimé des une ou plusieurs unités de freinage de roue par l'intermédiaire de l'air comprimé de commande adapté en pression.

5. Véhicule remorqué agricole (10) selon l'une quelconque des revendications précédentes, **caractérisé en ce que** le dispositif de réception de matériau pouvant être chargé (12) présente un contenant de stockage pouvant être chargé avec un matériau ou une surface de chargement pouvant être chargée avec un matériau.

6. Véhicule remorqué agricole (10) selon l'une quelconque des revendications précédentes, **caractérisé en ce que** le cylindre à fluide (20a, 20b) est articulé sur un châssis (14) ou une carrosserie du véhicule remorqué (10).

7. Véhicule remorqué agricole (10) selon l'une quelconque des revendications précédentes, **caractérisé par** un capteur de pression, qui est conçu pour détecter la pression de fluide du cylindre à fluide (20a, 20b).

8. Véhicule remorqué agricole (10) selon la revendication 7, **caractérisé en ce que** le capteur de pression est agencé sur ou dans le cylindre à fluide (20a, 20b) et est relié au régulateur de force de freinage (28) par une liaison conductrice de signaux.

9. Véhicule remorqué agricole (10) selon la revendication 7, **caractérisé en ce que** le capteur de pression est agencé sur ou dans le régulateur de force de freinage (28) et le cylindre à fluide (20a, 20b) est relié au capteur de pression sur ou dans le régulateur de force de freinage (28) par l'intermédiaire d'une conduite de fluide (30a, 30b).

10. Véhicule remorqué agricole (10) selon l'une quelconque des revendications précédentes, **caractérisé en ce que** le cylindre à fluide (20a, 20b) est réalisé sous forme de cylindre hydraulique.

11. Véhicule remorqué agricole (10) selon l'une quelconque des revendications précédentes, **caractérisé par** une suspension de timon hydraulique, le cylindre à fluide (20a, 20b) faisant partie de la suspension de timon hydraulique.

12. Véhicule remorqué agricole (10) selon l'une quelconque des revendications précédentes, **caractérisé par** un dispositif de réglage hydraulique (44) pour le timon (18), le cylindre à fluide (20a, 20b) faisant partie du dispositif de réglage hydraulique (44) pour le timon (18).

13. Procédé de freinage dépendant de la charge d'un véhicule remorqué agricole (10), notamment d'un véhicule remorqué agricole (10) selon l'une quelconque des revendications précédentes, le véhicule remorqué (10) étant accroché par l'intermédiaire d'un timon (18) à un attelage de remorque d'un véhicule tracteur et présentant au moins un cylindre à fluide (20a, 20b), qui est articulé sur le timon (18) et dont la pression de fluide dépend de l'état de chargement d'un dispositif de réception de matériau pouvant être chargé (12) du véhicule remorqué (10), comprenant l'étape suivante :
- l'induction du réglage d'une force de freinage dépendante de la charge au moyen d'un régulateur de force de freinage (28) d'un système de freinage (26) du véhicule remorqué (10) ; **caractérisé en ce que** l'induction du réglage de la force de freinage a lieu en fonction de la pression de fluide du cylindre à fluide (20a, 20b).

14. Procédé selon la revendication 13, **caractérisé par** au moins une des étapes suivantes :
- la fourniture d'air comprimé à une unité de soupape (38) du véhicule remorqué (10) par un système d'air comprimé du véhicule tracteur ;
- la fourniture d'air comprimé à une ou plusieurs unités de freinage de roue du véhicule remorqué (10) par l'unité de soupape (38) ;
- la commande du fonctionnement de l'unité de soupape (38) au moyen du régulateur de force de freinage (28).

15. Procédé selon la revendication 13 ou 14, **caractérisé par** au moins une des étapes suivantes :
- l'introduction d'air comprimé de commande à partir d'un système d'air comprimé du véhicule tracteur dans le régulateur de force de freinage (28) ;
- l'adaptation de la pression d'air de l'air comprimé de commande par le régulateur de force de freinage (28) en fonction de la pression de fluide du cylindre à fluide (20a, 20b) ;
- l'évacuation de l'air comprimé de commande adapté en pression hors du régulateur de force de freinage (28) ;
- l'introduction de l'air comprimé de commande adapté en pression dans l'unité de soupape (38) par l'intermédiaire d'une conduite de liaison (36) entre le régulateur de force de freinage (28) et l'unité de soupape (38) ;
- la commande d'une alimentation en air comprimé des une ou plusieurs unités de freinage de roue par l'intermédiaire de l'air comprimé de commande adapté en pression par l'unité de soupape (38).

16. Procédé selon l'une quelconque des revendications 13 à 15, **caractérisé par** l'étape suivante :
- la détection de la pression de fluide du cylindre à fluide (20a, 20b) au moyen d'un capteur de pression du véhicule remorqué (10) ;
la pression de fluide du cylindre de fluide (20a, 20b) étant détectée de préférence directement sur ou dans le cylindre à fluide (20a, 20b) et un signal de pression électrique concernant la pression de fluide détectée étant fourni au régulateur de force de freinage (28) par le capteur de pression ; ou
le cylindre à fluide (20a, 20b) étant relié de préférence par l'intermédiaire d'une conduite de fluide (30a, 30b) avec le régulateur de force de freinage (28) comprenant le capteur de pression et la pression de fluide du cylindre à fluide (20a, 20b) étant détectée sur le régulateur de force de freinage (28).

17. Procédé selon l'une quelconque des revendications 13 à 16, **caractérisé par** au moins une des étapes suivantes :
- la suspension du timon (18) au moyen d'une suspension de timon hydraulique (44) du véhicule remorqué (10) comprenant le cylindre à fluide (20a, 20b) ;
- le réglage de l'inclinaison et/ou de la hauteur du timon (18) au moyen d'un dispositif de réglage hydraulique (44) du véhicule remorqué (10) comprenant le cylindre à fluide (20a, 20b).
